# EUROPÄISCHE PATENTANMELDUNG

(11) **EP 2 486 984 A2**
(43) Veröffentlichungstag der Anmeldung: **15.08.2012**
(21) Anmeldenummer: 12000775.2
(22) Anmeldetag: 07.02.2012
(51) Int. Cl.: B03C 3/41

(54) **Verfahren zur Aufbereitung von Druckluft sowie Vorrichtung zur Aufbereitung von Druckluft**

(30) Priorität: 11.02.2011 DE 102011011054
(71) Anmelder: Mayer, Thomas, 88499 Altheim (DE)
(72) Erfinder: Mayer, Thomas, 88499 Altheim (DE)
(74) Vertreter: Otten, Herbert

(57) **Zusammenfassung**

Die Erfindung betrifft ein Verfahren zur Aufbereitung von Druckluft, beispielsweise für Druckluftverbraucher in Lackieranlagen, wobei in einem ersten Verfahrensschritt ein Reinigen der Druckluft über mindestens eine Filterstufe (7) erfolgt, wonach die gereinigte Druckluft über Druckluftleitungen (12) an mindestens einer Zufuhrleitung für mindestens einen Verbraucher bereitgestellt wird.

Erfindungsgemäß passiert die Druckluft vor der Bereitstellung an den Verbraucher mindestens eine Hochspannungs-Entladungsvorrichtung (8) und wird dabei einer an dieser Vorrichtung (8) anliegenden Hochspannung ausgesetzt.

Weiterhin betrifft die Erfindung eine Vorrichtung zur Aufbereitung von Druckluft, beispielsweise für Druckluftverbraucher in Lackieranlagen.

## Beschreibung

Die Erfindung betrifft ein Verfahren zur Aufbereitung von Druckluft, beispielsweise für Druckluftverbraucher in Lackieranlagen nach dem Oberbegriff des Anspruchs 1 sowie eine Vorrichtung zur Aufbereitung von Druckluft nach dem Oberbegriff des Anspruchs 8.

Eine Aufbereitung von Druckluft ist beispielsweise bei Lackieranlagen, in welchen die aufbereitete Druckluft zur Vernebelung der Farbe eingesetzt wird, eine für das Lackierergebnis wesentliche und beeinflussbare Größe.

Beispielsweise wird mit der Druckschrift DE 20 2008 006 882 U1 eine pneumatische Lackiervorrichtung mit Spritzpistole und eine Druckluftaufbereitung beschrieben, in welcher eine Kompressoranlage einen Druckluftbehälter mit Druckluft versorgt, wobei die Druckluft mittels einer regenerierbaren Entfeuchtungsvorrichtung getrocknet und mittels einer geregelten Heizvorrichtung erwärmt wird. Diese Luft gelangt sodann zum Druckluftverbraucher der Lackierpistole.

Nachteilig bei dem bekannten Aufbereitungsverfahren bzw. der Vorrichtungen ist, dass das Lackierergebnis weitere Verbesserungen erfahren sollte, da insbesondere der Volumenbedarf an Druckluft und/oder der bereitzustellende Druck erheblich ist. Volumen und Druck sind jedoch Kostenfaktoren, welche das Verbrauchsmaterial Druckluft entscheidend prägen.

Des Weiteren sind aus dem Stand der Technik Druckluftpistolen bekannt, welche über eine elektrische Hochspannungsentladung an der Pistolenspitze geladene bzw. ionisierte Luft erzeugen, um damit beispielsweise Kunststoffbehälter staubfrei zu blasen. Diese Pistolen sind jedoch nicht zur verneblung von Farbe ausgebildet. Zusätzlich können diese zur Verwendung von lösungsmittelhaltigen Farben in Lackieranlagen vollkommen ausgeschlossen werden, da beim Lackieren mit lösungsmittelhaltigen Farben die Gefahr besteht, dass Lösungsmitteldämpfe beim Lackiervorgang durch eine Hochspannungsentladung entzündet werden.

Aus diesem Grund hat sich die Erfindung die Aufgabe gestellt ein Verfahren zur Aufbereitung von Druckluft derart weiterzubilden, dass eine wirtschaftliche Bereitstellung von hochqualitativer Druckluft erfolgen kann.

Diese Aufgabe wird durch die Merkmale des Verfahrensanspruchs 1 und durch die Merkmale des Vorrichtungsanspruchs 8 gelöst.

Vorteilhafte Weiterbildungen sowie zweckmäßige Ausgestaltungen der Erfindung sind in den abhängigen Ansprüchen angegeben.

### Beschreibung der Erfindung

Das erfindungsgemäße Verfahren umfasst eine Aufbereitung von Druckluft, beispielsweise für Druckluftverbraucher in Lackieranlagen, wobei in einem ersten Verfahrensschritt ein Reinigen der Druckluft über mindestens eine Filterstufe erfolgt, wonach die gereinigte Druckluft über Druckluftleitungen an mindestens einer Zufuhrleitung für mindestens einen Verbraucher bereitgestellt wird.

Der Kern der Erfindung ist, dass die Druckluft vor der Bereitstellung an den Verbraucher mindestens eine Hochspannungs-Entladungsvorrichtung passiert und dabei einer an dieser Vorrichtung anliegenden Hochspannung ausgesetzt wird.

Eine auf diese Weise aufbereitete Druckluft an der Verbrauchsstelle zur Verfügung zu stellen, erlaubt einen verbesserten Farbauftrag bei gleichen oder kostenreduzierten Drucklufterzeugungskosten.

Weiterhin kann mit dem erfindungsgemäßen Verfahren auch Druckluft für Lackieranlagen, beispielsweise in der Anwendung der so genannten "Air-Mix-Technologie" (weiteres zerstäuben und mitnehmen der Farbe mit Druckluft an der Airless-Spritzdüse), aufbereitet werden, wodurch ein verbesserter Farbauftrag bei geringerem Arbeitsdruck ausgeführt werden kann.

In einer bevorzugten Ausgestaltung der Erfindung ist es vorgesehen, dass der Reinigungsschritt ein Reinigen bzw. Filtrieren der Druckluft zur Reduzierung von Öl und/oder Öl-Dampf und/oder Wasser und/oder wasserdampf und/oder Festpartikelanteilen bewirkt.

Es ist bekannt, dass elektrostatische Ladungen in der Druckluft von Fest- bzw. Flüssigstoffpartikeln getragen werden. Aus diesem Grunde verbessert die Reinigung/Filtrierung den Einfluss der Hochspannung auf die Druckluft als solche.

Es ist in einer weiteren, bevorzugten Ausführungsform der Erfindung vorgesehen, dass eine Druckregelung gegenüber einer Druckluftquelle, beispielsweise einem Kompressor mit Druckreservoir erfolgt, wobei die Druckregelung vorzugsweise nach dem passieren der mindestens einen Hochspannungs-Entladungsvorrichtung insbesondere vor der Bereitstellung an den Verbraucher erfolgt.

Durch eine Druckregelung können die Bereitstellungskosten gesenkt werden (weniger Energiebedarf) und ggf. auch kostengünstige Steuer- und Regelelemente im Druckluftstrang eingesetzt werden, da diese lediglich gegen eine verringerte Gegenkraft geschaltet werden müssen.

Überdies ist es in einer weiteren, bevorzugten Ausgestaltung der Erfindung vorgesehen, dass in einem weiteren Verfahrensschritt eine Erwärmung der Druckluft erfolgt, wobei die Erwärmung vorzugsweise nach der Filterstufe und vor oder nach dem passieren der mindestens einen Hochspannungs-Entladungsvorrichtung erfolgt.
Die Aufbereitung durch Erwärmung der Druckluft verbessert die Löslichkeit der zu vernebelnden Farbe, wodurch den stetig strenger werdenden Anforderungen an die Menge des Lösungsmittels in der Farbe begegnet werden kann. Das Gesamtergebnis wird in Zusammenwirkung mit den Effekten der Hochspannung verbessert.

Darüber hinaus ist es in einer weiteren, bevorzugten Ausgestaltung der Erfindung vorgesehen, dass die Erwärmung der Druckluft in einer schlauchförmigen Leitung mit einem entlang der Leitung verlaufenden Heizelement erfolgt, wobei die Erwärmung kontinuierlich während des Durchlaufens der Leitung vollzogen wird.

Die Erwärmung der Druckluft in der Schlauchleitung erfolgt kontinuierlich entlang des Schlauchvolumens, wobei die Temperatur der Druckluft mittels einer entsprechenden Regelung konstant gehalten werden kann, unabhängig von eventuellen Schwankungen des angeforderten Druckluft-Volumenstroms. Dies ist erforderlich, um beispielsweise bei einem erhöhten Druckluftverbrauch mittels eines schnell reagierenden Heizsystems die Druckluft innerhalb einer kurzen Zeitspanne gleichmäßig zu erwärmen. Dadurch muss beim Einschalten der Lackierpistole (Luftstrom) nicht sofort ein Reservoir mit ausreichendem Volumen an erwärmter Druckluft zur Verfügung stehen, sondern es erfolgt eine kontinuierliche Erwärmung während des Volumenstroms in der Schlauchleitung. Darüber hinaus kann bei einer inaktiven Lackierpistole (Luftstrom stockt) so ein lokales Überhitzen an der Heizung eher verhindert werden. Zusätzlich können auf diese Weise auch Energiebedarfsspitzen beim Schaltvorgang vermieden werden.

Es ist in einer weiteren Ausgestaltung der Erfindung vorgesehen, dass die Druckluft an mindestens einer, vorzugsweise einer Vielzahl von Hochspannungs-Entladungsspitzen vorbeigeführt wird, insbesondere entlang eines Hochspannungs-Entladungekamms strömt.

Beim Einsatz eines Hochspannungs-Entladungskamms mit einer vielzahl von Hochspannungs-Entladungsspitzen kann bei einem höheren Druckluft-Volumenbedarf ein höherer Durchsatz von aufbereiteter Druckluft erfolgen, insbesondere bei großen Rohr- oder Druckbehälter-Querschnitten.

Überdies ist es in einer weiteren, bevorzugten Ausgestaltung der Erfindung vorgesehen, dass die Hochspannung zwischen 1kv und 30kV oder höher, vorzugsweise zwischen 5kV und 15kV, insbesondere ca. 5KV bis 10kV beträgt und als Gleichspannung oder Wechselspannung anliegt.

Die erforderliche Hochspannung wird durch Transformatoren zur Verfügung gestellt, wobei die Hochspannung an den Entladungsvorrichtungen an die Rohrleitungsdimension angepasst werden kann, um Luftdurchschläge zu vermeiden.

Die Erfindung sieht weiterhin eine Vorrichtung zur Aufbereitung von Druckluft für Druckluftverbraucher in Lackieranlagen vor. Die Vorrichtung umfasst mindestens ein Filterelement zur Reinigung der Druckluft, und mindestens einen Anschluss für mindestens eine Zufuhrleitung zu mindestens einem Verbraucher.

Die erfindungsgemäße Vorrichtung ist dadurch gekennzeichnet, dass zwischen dem mindestens einen Filterelement und dem mindestens einen Anschluss eine Anordnung mindestens einer Hochspannungs-Entladungsvorrichtung vorgesehen ist, an welcher die Druckluft zumindest teilweise vorbeiströmt.

Mit der erfindungsgemäßen Vorrichtung wird eine Aufbereitung der Druckluft dahingehend erreicht, dass beispielsweise in der Anwendung der so genannten "Air-Mix-Technologie" (hydraulisches Zerstäuben der Farbe an einer Airless Sprühanlage und transportieren des Farbnebels mit Druckluft ausgehend von der Airless-Spritzdüse), ein verbesserter Farbauftrag bei geringerem Energieaufwand aufgrund beispielsweise einer verbesserten Farbvernebelung ausgeführt.

In einer überdies bevorzugten Ausgestaltung der Erfindung ist vorgesehen, dass mindestens eine Druckregeleinheit und/oder mindestens ein Heizsystem zur Erwärmung der Druckluft, welches vorzugsweise in einer schlauchförmigen Leitung integriert ist und/oder mindestens einen Strömungswächter mit Rückströmsicherung umfasst, wobei die Elemente, Einheiten und Systeme mittels einer Rohleitung verbunden sind.

Die Anlagenelemente, -einheiten und -systeme können gemeinsam in einem Gehäuse (Schrank) angeordnet werden, wodurch bestehende Lackieranlagen einfach und schnell umrüstbar sind. Auch dezentralisierte Anordnungen an einzelnen Lackierkabinen und/oder als mobile Einheiten sind vorstellbar.

Das Heizsystem ist vorzugsweise als so genannte Schlauchheizung (Schlauchleitung mit integrierter Heizleitung) ausgeführt. Bei der Verwendung einer einfachen Schlauchleitung zur Zuleitung der Druckluft zu einer Verbrauchsstelle kann die Druckluft zur Erwärmung zum Beispiel durch ein im Gehäuse integriertes Heizsystem mit Heizwendel geleitet werden. Näheres hierzu wird im Ausführungsbeispiel beschrieben.

Die Rückströmsicherung verhindert ein Zurückströmen von mit Lösungsmitteldampf angereicherter Luft bei einem Druckverlust. Auf diese Weise wird ein Explosionsschutz im Bereich der Hochspannungsquelle und der Hochspannungs-Entladungsvorrichtung ausreichend gewährleistet. Der Strömungswächter kann beispielsweise den Betrieb der Hochspannung unterbrechen, wenn keine Druckluft strömt.

Überdies sieht die Erfindung in einer weiteren, bevorzugten Ausgestaltung vor, dass mindestens eine Hochspannungs-Entladungsspitze, vorzugsweise mindestens ein Hochspannungs-Entladungskamm vorgesehen ist.

Ein Hochspannungs-Entladungskamm mit einer Vielzahl von Hochspannungs-Entladungsspitzen erzeugt bei einem höheren Druckluft-volumenbedarf Möglichkeiten für einen höheren Durchsatz von aufbereiteter Druckluft, insbesondere bei großen Rohr- oder Druckbehälter-Querschnitten.

Überdies ist in einer weiteren bevorzugten Ausgestaltung der Erfindung vorgesehen, dass ein Verfahren nach einem oder mehreren der Ansprüche 1 bis 7 durch diese Vorrichtung ausführbar ist und die jeweiligen damit verbundenen Vorteile realisiert werden.

Weitere Merkmale der Erfindung gehen aus der nachfolgenden Figurenbeschreibung des Ausführungsbeispiels und den Zeichnungen hervor. Für eine verbesserte Übersicht wird das erfindungsgemäße Verfahren anhand der zur Durchführung des Verfahrens verwendeten Vorrichtung beschrieben:

Dabei zeigen:
- Figur 1: eine Blockschaltbild-Darstellung der erfindungsgemäßen Vorrichtung zur Aufbereitung von Druckluft mit Hochspannungs-Entladung zur Durchführung des Verfahrens;
- Figur 2: Eine Blockschaltbild-Darstellung der Vorrichtung nach Figur 1 mit einem variierten Heizsystem;
- Figur 3: eine schematische Darstellung einer erfindungsgemäßen Vorrichtung mit einem Heizsystem und eine Hochspannungs-Entladungsvorrichtung.

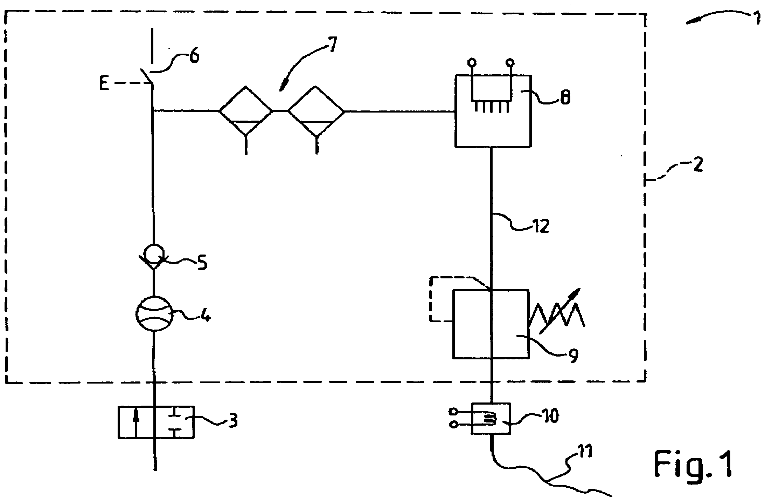

Figur 1 zeigt eine Blockschaltbild-Darstellung einer Vorrichtung 1 zur Aufbereitung von Druckluft, beispielsweise für Druckluftverbraucher in Lackieranlagen, mit welcher das erfindungsgemäße Verfahren durchgeführt wird.

Die zur Durchführung des Verfahrens erforderlichen Vorrichtungselemente sind in einem Gehäuse 2 angeordnet.

Die Druckluft-Aufbereitungsvorrichtung 1 umfasst in Strömungsrichtung der Druckluft ein Ventil 3, welches im geöffneten Zustand die noch nicht aufbereitete Druckluft in die Druckluft-Aufbereitungsvorrichtung 1 einleitet.

Die Einspeisung der Druckluft in die Druckluft-Aufbereitungsvorrichtung 1 erfolgt ausgehend von einem Druckbehälter und/oder Kompressor (nicht dargestellt), wobei die Druckluft vorzugsweise ein Druck im Bereich von 0 bis 10 bar aufweist.

Nach dem Ventil 3 wird die Druckluft einem Strömungswächter 4 zugeführt, welcher den Volumenstrom der Druckluft in der Druckluft-Aufbereitungsvorrichtung 1 überwacht. Bei einem Strömungsabriss oder gar einer Richtungsumkehr kann über den Strömungswächter 9 die Zufuhr und/oder eine Rückströmsicherung 5 abgeschaltet bzw. betätigt werden, um ein ungewünschtes Rückströmen von Luft von der Lackieranlage in die Vorrichtung zu verhindern. Dadurch kann das Risiko des Eintretens von mit Lösungsmitteldämpfen angereicherter Luft in die Vorrichtung zum Zwecke des Explosionsschutzes minimiert werden. Der Strömungswächter 4 kann beispielsweise auch zur Abschaltung der Hochspannung eingesetzt werden, wenn der Druckluftstrom unterbrochen wird.

Für eine Drucküberwachung der noch unbehandelten Druckluft ist in Strömungsrichtung ein Druckschalter 6 angeordnet, welcher beispielsweise bei einem unerwünschten Druckanstieg ein optisches und/oder akustisches Signal generiert. Das Signal des Druckschalters 6 kann auch zur Ansteuerung eines Ventils verwendet werden, welches bei Druckanstieg und/oder Abfall unter gegebene Grenzwerte schließt oder öffnet.

In Strömungsrichtung nach der Rückströmsicherung 5 ist ein Filterelement 7 angeordnet, welche die Druckluft reinigt bzw. filtriert, wodurch Öl und/oder Öldampf und/oder Wasser und/oder Wasserdampf und/oder Festpartikelanteile in der Druckluft eliminiert bzw. reduziert werden.

Das Filterelement 7 kann zusätzlich einen Kondensatablass (nicht dargestellt) aufweisen, welcher ein automatisches Abführen des aus der Druckluft ausfiltrierten Kondensats durchführt.

In Strömungsrichtung nach dem Filterelement 7 ist eine Hochspannungs-Entladungsvorrichtung 8 angeordnet, wobei die mit einer Hochspannung beaufschlagten Vorrichtungselemente in der Hochspannungs-Entladungsvorrichtung 8 als nadelförmige, kammartig angeordnete Spitzen, netz- oder gitterförmige, ringförmige und/oder plattenförmige Elemente ausgebildet sein können.

Im vorgenannten Ausführungsbeispiel wird die erfindungsgemäße Druckluftaufbereitung anhand einer Hochspannungs-Entladungsvorrichtung 8 mit Hochspannungs-Entladungsspitzen 14 beschrieben.

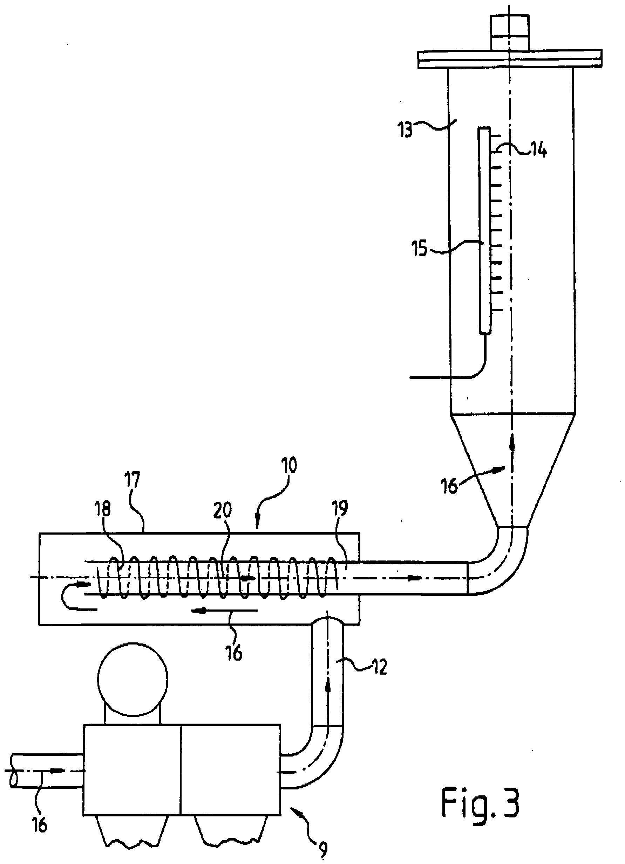

Die durchströmende Druckluft wird dabei an einer Hochspannungs-Entladungsspitze 14 vorbeigeführt, an welcher eine Hochspannung anliegt. Durch die Hochspannung werden ggf. einzelne Luftbestandteile ionisiert und/oder bereits geladene Bestandteile elektrostatisch beeinflusst, wodurch die verbesserte Luftqualität zur Verarbeitung bei einem Druckluftverbraucher herbeigeführt wird. Die anliegende Hochspannung ist dabei so zu wählen, dass weder ein Durchschlagen auf die Gehäusebestandteile erfolgt, noch eine zu geringe Einflussnahme auf die vorbeiströmende Luft gegeben ist, wobei diese Spannung stets entsprechend der Geometrie der jeweiligen Hochspannungs-Entladungsvorrichtung 8 anzupassen ist. Eine einfachste Hochspannungs-Entladungsvorrichtung 8 ist durch einen Volumenabschnitt mit einer oder mehrerer in diesen hineinragenden Metallspitzen gegeben, wobei an der Spitze eine Hochspannung anliegt, so dass sich elektrostatische Spitzenfelder bilden. Eine mehrere Spitzen umfassendere Hochspannungs-Entladungsvorrichtung 8 wird in der nachfolgenden Figur 3 näher beschrieben.

Nach dem Durchströmen der Hochspannungs-Entladungsvorrichtung 8 wird die Druckluft einem Druckregler 9 zugeführt, welcher die noch auf Kompressor- bzw. Reservoirdruck befindliche Druckluft auf den erforderlichen Arbeitsdruck regelt. Durch eine Druckregelung können Kosten eingespart werden, ohne auf einen Lackierprozess mit konstantem Druck zu verzichten, wenn eine ausreichende Luftqualität gegeben ist. Prinzipiell kann der Druckregler auch zwischen Filterelement 7 und Hochspannungs-Entladungsvorrichtung 8 angeordnet werden, um eine Hochspannungsentladung mit verminderter Druckluftmenge auszuführen.

In Strömungsrichtung nach dem Druckregler 9 wird die Druckluft über ein nachgeschaltetes Heizsystem 10 erwärmt, wobei das Heizsystem beispielsweise eine Schlauchleitung 11 mit einer vorzugsweise über die Schlauchlänge integrierte Heizleitung umfasst. Auf diese Weise wird ein kontinuierliches Erwärmen der Druckluft in der Schlauchleitung 11 durchgeführt, ohne auch große Volumina mit hohem Energiebedarf erwärmt werden können. Im Sinne der Erfindung ist unter einer Schlauchleitung eine rohrförmige, vorzugsweise flexible Leitung zu verstehen, welche ein Fluid zwischen einer Quelle und einem Verbraucher durchleitet und aus Metall bzw. Kunststoff oder Gummi hergestellt ist. Die Schlauchleitung 11 stellt vorzugsweise die Verbindung zwischen der erfindungsgemäßen Druckluft-Aufbereitungsvorrichtung 1 und einer Zuführung für eine Verbrauchsstelle, beispielsweise eine Lackierpistole in der Lackieranlage dar.

Es ist jedoch auch denkbar, dass die Schlauchleitung 11 mit integrierter Heizleitung innerhalb des Gehäuses 2 angeordnet wird, wobei die Schlauchleitung 11 auf einer Art Schlauchtrommel aufgewickelt ist, oder als feste Leitungsspirale vorgesehen wird.

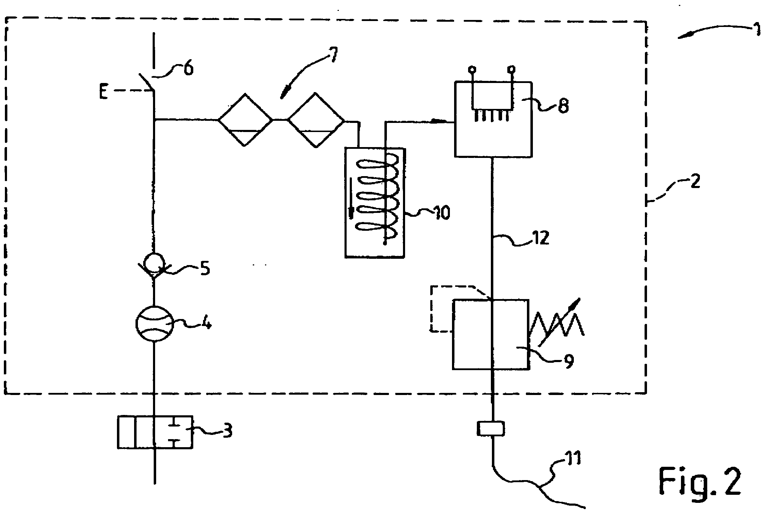

In Figur 2 ist eine Blockschaltbild-Darstellung der erfindungsgemäßen Vorrichtung nach Figur 1 gezeigt, wobei im Unterschied zur Druckluft-Aufbereitungsvorrichtung 1 nach Figur 1 das Heizsystem 10 zwischen dem Filterelement 7 und der Hochspannungs-Entladungsvorrichtung 8 angeordnet ist. Dadurch kann die Druckluft zentral nach der Filtrierung erwärmt werden, wodurch die vorher beschriebene Schlauchleitungen 11 mit Heizleitung entfallen kann. Das Heizsystem 10 wird in der nachfolgenden Figur 3 näher beschrieben.

In Figur 3 ist eine schematische Darstellung einer erfindungsgemäßen Vorrichtung mit einem Heizsystem und einer Hochspannungs-Entladungsvorrichtung 8 gezeigt.

Das in Figur 3 gezeigte Heizsystem 10 umfasst ein Gehäuse 17, welches eingangsseitig mit einer Rohrleitung 12 zur Einleitung der bereits vorgereinigten bzw. filtrierten Druckluft verbunden ist. Die in das Gehäuse 17 eingeleitete Druckluft wird an einer Heizleitung 18 vorbei geführt und erwärmt, wobei die Heizleitung beispielsweise als Heizwendel ausgeführt werden kann. In dem Ausführungsbeispiel nach Figur 3 ist die Heizleitung 18 um ein in das Gehäuse 17 hineinragendes Rohrstück 19 der Rohrleitung 12 gewickelt. Die in dem Gehäuse 17 eingeströmte Druckluft strömt in das Rohrstück 19 ein, wobei die Druckluft entgegen der Strömungsrichtung 16 in Strömungsrichtung 20 zur nachgeschalteten Hochspannungs-Entladungsvorrichtung 8 strömt. Dadurch können auch größere Druckluftmengen aufgrund der verlängerten Heizstrecke gleichmäßig erwärmt werden. Es ist auch denkbar ein Heizsystem zu verwenden, welches die Druckluft mittels einer MikrowellenTechnik erwärmt. Je nach Verwendung der aufzubereitenden Druckluft ist es denkbar, dass das Heizsystem 10 in Fließrichtung vor dem Filterelement 7 angeordnet wird, wodurch das Reinigungs- bzw. Filtrierergebnis der Druckluft verbessert werden kann.

Die Hochspannungs-Entladungsvorrichtung 8 umfasst ein Gehäuse 13, in welchem vorliegend ein Hochspannungs-Entladungskamm 15 zur Behandlung der Druckluft angeordnet ist.

Vorzugsweise ist in dem Gehäuse 13 eine Vielzahl von entsprechenden Entladungskämmen 15 angeordnet, um eine ausreichende Angriffsfläche für größere Luftmengen bereit zu stellen.

Die in das Gehäuse 13 einströmende Druckluft wird an den einzelnen Hochspannungs-Entladungsspitzen 14 vorbeigeführt und erfährt den Einfluss der Hochspannung. Zur Behandlung der Druckluft werden die Hochspannungs-Entladungsspitzen 14 mit einer Spannung zwischen 1 und 30 KV oder höher versorgt.

Die im Anschluss an die Hochspannungs-Vorrichtung 1 folgenden Elemente einer möglichen weiteren Schlauchheizung, einer Druckregelung und/oder anderer oben beschriebener Elemente wurde in Figur 3 nicht dargestellt.

Die Erfindung ist jedoch nicht auf das gezeigte Ausführungsbeispiel beschränkt. Sie umfasst vielmehr all diejenigen Ausführungen, welche von dem erfindungsgemäßen Gedanken Gebrauch machen.

### Bezugszeichenliste:

1. Druckluft-Aufbereitungsvorrichtung
2. Gehäuse (Schrank)
3. Ventil
4. Strömungswächter
5. Rückströmsicherung
6. Druckschalter
7. Filterelement/Filterstufe
8. Hochspannungs-Entladungsvorrichtung
9. Druckregler
10. Heizsystem
11. Schlauchleitung
12. Rohrleitung
13. Gehäuse (Hochspannungs-Entladung)
14. Hochspannungs-Entladungsspitze
15. Hochspannungs-Entladungskamm
16. Strömungsrichtung
17. Gehäuse (Heizsystem)
18. Heizleitung
19. Rohrstück
20. Strömungsrichtung

## Patentansprüche

1. Verfahren zur Aufbereitung von Druckluft, beispielsweise für Druckluftverbraucher in Lackieranlagen, wobei in einem ersten Verfahrensschritt ein Reinigen der Druckluft über mindestens eine Filterstufe (7) erfolgt, wonach die gereinigte Druckluft über Druckluftleitungen (12) an mindestens einer Zufuhrleitung für mindestens einen Verbraucher bereitgestellt wird, **dadurch gekennzeichnet, dass** die Druckluft vor der Bereitstellung an den Verbraucher mindestens eine Hochspannungs-Entladungsvorrichtung (8) passiert und dabei einer an dieser Vorrichtung (8) anliegenden Hochspannuhg ausgesetzt wird.

2. Verfahren zur Aufbereitung von Druckluft nach Anspruch 1, **dadurch gekennzeichnet, dass** der Reinigungsschritt ein Reinigen bzw. Filtrieren der Druckluft zur Reduzierung von Ö1 und/oder Ö1-Dampf und/oder Wasser und/oder Wasserdampf und/oder Festpartikelanteilen bewirkt.

3. Verfahren zur Aufbereitung von Druckluft nach Anspruch 1 oder 2, **dadurch gekennzeichnet, dass** eine Druckregelung (9) gegenüber einer Druckluftquelle, beispielsweise einem Kompressor mit Druckreservoir erfolgt, wobei die Druckregelung (9) vorzugsweise nach dem passieren der mindestens einen Hochspannungs-Entladungsvorrichtung (8) insbesondere vor der Bereitstellung an den Verbraucher erfolgt.

4. Verfahren zur Aufbereitung von Druckluft nach einem der Ansprüche 1 bis 3, **dadurch gekennzeichnet, dass** in einem weiteren Verfahrensschritt eine Erwärmung der Druckluft erfolgt, wobei die Erwärmung vorzugsweise nach der Filterstufe (7) und vor oder nach dem passieren der mindestens einen Hochspannungs-Entladungsvorrichtung (8) erfolgt.

5. Verfahren zur Aufbereitung von Druckluft nach Anspruch 4, **dadurch gekennzeichnet, dass** die Erwärmung der Druckluft in einer schlauchförmigen Leitung (11) mit einem entlang der Leitung (11) verlaufenden Heizelement erfolgt, wobei die Erwärmung kontinuierlich während des Durchlaufens der Leitung (11) vollzogen wird.

6. Verfahren zur Aufbereitung von Druckluft nach einem der Ansprüche 1 bis 5, **dadurch gekennzeichnet, dass** die Druckluft an mindestens einer Hochspannungs-Entladungsspitze, vorzugsweise einer Vielzahl von Hochspannungs-Entladungsspitzen (14) vorbeigeführt wird, insbesondere entlang eines Hochspannungs-Entladungskamms (15) strömt.

7. Verfahren zur Aufbereitung von Druckluft nach einem der Ansprüche 1 bis 6, **dadurch gekennzeichnet, dass** die Hochspannung zwischen 1kV und 30kv oder höher, vorzugsweise zwischen 5kV und 15kV, insbesondere ca. 5kV bis 10kV beträgt und als Gleichspannung oder Wechselspannung anliegt.

8. Vorrichtung zur Aufbereitung von Druckluft für Druckluftverbraucher in Lackieranlagen, umfassend mindestens ein Filterelement (7) zur Reinigung der Druckluft, und mindestens einen Anschluss für mindestens eine Zufuhrleitung zu mindestens einem Verbraucher, **dadurch gekennzeichnet, dass** zwischen dem mindestens einen Filterelement (7) und dem mindestens einen Anschluss eine Anordnung mindestens einer Hochspannungs-Entladungsvorrichtung (8) vorgesehen ist, an welcher die Druckluft zumindest teilweise vorbeiströmt.

9. Vorrichtung nach Anspruch 8, **dadurch gekennzeichnet, dass** mindestens eine Druckregeleinheit (9) und/oder mindestens ein Heizsystem (10) zur Erwärmung der Druckluft, welches vorzugsweise in einer schlauchförmigen Leitung (11) integriert ist und/oder mindestens einen Strömungswächter (4) mit Rückströmsicherung (5) umfasst ist, wobei die Elemente, Einheiten und Systeme mittels einer Rohleitung (12) verbunden sind.

10. Vorrichtung nach Anspruch 8 oder 9, **dadurch gekennzeichnet, dass** mindestens eine Hochspannungs-Entladungsspitze (14), vorzugsweise mindestens ein Hochspannungs-Entladungskamm (15) vorgesehen ist.

11. Vorrichtung nach Anspruch 8 oder 9 oder 10, **dadurch gekennzeichnet, dass** ein Verfahren nach einem oder mehreren der Ansprüche 1 bis 7 durch diese Vorrichtung ausführbar ist.
